(19) Europäisches Patentamt
European Patent Office
Office européen des brevets

(11) EP 4 647 161 A1

(12) **EUROPEAN PATENT APPLICATION**
published in accordance with Art. 153(4) EPC

(43) Date of publication:
**12.11.2025 Bulletin 2025/46**

(21) Application number: **24849466.8**

(22) Date of filing: **24.07.2024**

(51) International Patent Classification (IPC):
***B01J 23/63*** (2006.01) ***B01J 20/16*** (2006.01)
***B01J 23/46*** (2006.01) ***B01J 35/64*** (2024.01)
***B01J 35/63*** (2024.01) ***B01J 35/51*** (2024.01)
***B01J 37/02*** (2006.01) ***C01B 3/04*** (2006.01)
***B01J 35/60*** (2024.01) ***B01J 35/00*** (2024.01)

(52) Cooperative Patent Classification (CPC):
**B01J 20/16; B01J 23/46; B01J 23/63; B01J 35/00; B01J 35/51; B01J 35/60; B01J 35/63; B01J 35/64; B01J 37/02; C01B 3/04;** Y02E 60/36

(86) International application number:
**PCT/KR2024/010749**

(87) International publication number:
**WO 2025/028897 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 KR 20230098840**

(71) Applicant: **LG CHEM, LTD.**
**Seoul 07336 (KR)**

(72) Inventors:
- **KIM, Heewon**
  **Daejeon 34122 (KR)**
- **KANG, Kyungyeon**
  **Daejeon 34122 (KR)**
- **YOON, Youngchan**
  **Daejeon 34122 (KR)**
- **KIM, Hyeonbin**
  **Daejeon 34122 (KR)**
- **JEONG, Byeongjun**
  **Daejeon 34122 (KR)**
- **HAN, Sangbeom**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CATALYST FOR DECOMPOSITION OF AMMONIA, AND METHOD FOR DECOMPOSITION OF AMMONIA**

(57) The present disclosure relates to a catalyst for decomposition of ammonia and a method for decomposition of ammonia.

【FIG. 2】

Example 1

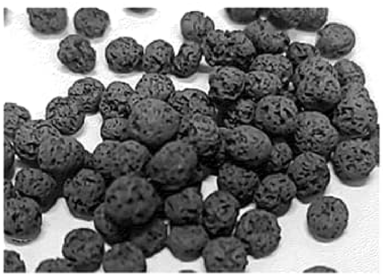



Processed by Luminess, 75001 PARIS (FR)

## Description

## [TECHNICAL FIELD]

CROSS-REFERENCE TO RELATED APPLICATION(S)

This application claims the benefit of Korean Patent Application No. 10-2023-0098840 filed on July 28, 2023 and Korean Patent Application No. 10-2024-0097992 filed on July 24, 2024 with the Korean Intellectual Property Office, the disclosures of which are herein incorporated by reference in their entirety.

The present disclosure relates to a catalyst for decomposition of ammonia and a method for decomposition of ammonia.

## [BACKGROUND OF ART]

Recently, with the increasing interest in the environment and energy, the issue about hydrogen economy is being also magnified.

Hydrogen economy refers to an economy industrial structure using hydrogen as a main energy source. Namely, it refers to economic system that departs from the current energy system centering around fossil fuel, increases electric power generation system, heat production system, machine such as automobiles, and the like, utilizing hydrogen as an energy source, and newly creates industries and markets of all the fields required to stably produce, store and transport hydrogen.

In such system, hydrogen can be produced through various means such as electrolysis of water, reforming of natural gas, and gasification of biomass, and it can be dispensed through a pipeline network or transported to hydrogen fuel cells, but since direct transportation of hydrogen costs a lot and is at high risk, there is a growing interest on technology for easily and safely transporting hydrogen at a low price.

One of the methods for efficiently storing and transporting hydrogen is to transport ammonia, decompose transported ammonia and use as a hydrogen source.

Since a reaction for decomposing ammonia into hydrogen and nitrogen is an endothermic reaction with large energy difference, and the activation energy of the reaction is also very high, a lot of energy is required to obtain a useful quantity of hydrogen gas as a product, and thus, production of hydrogen costs a lot.

Accordingly, there is a growing interest in the studies of a catalyst for decomposition of ammonia with high ammonia decomposition efficiency.

## [DETAILED DESCRIPTION OF THE INVENTION]

### [Technical Problem]

It is an object of the invention to provide a catalyst for decomposition of ammonia having excellent low temperature decomposition performance at high space velocity.

It is another object of the invention to provide a catalyst for decomposition of ammonia in which catalyst heat aggregation is prevented, thus being capable of providing reaction process stability, and having improved lifespan.

It is another object of the invention to provide a method for decomposition of ammonia using such a catalyst for decomposition of ammonia.

### [Technical Solution]

According to the present disclosure, provided is a catalyst for decomposition of ammonia comprising: a carrier, and catalytically active components supported on the carrier, wherein the catalytically active components comprise i) ruthenium (Ru) as first metal; ii) a second metal; and iii) a third metal, wherein each of the second metal and third metal is independently one or more selected from the group consisting of lanthanum (La), cerium (Ce), aluminum (Al), and zirconium (Zr), the amount of the first metal ruthenium is 0.1 to 1 part by weight, based on 100 parts by weight of the total catalyst, the porosity is 30 to 60%, and the median value of pore diameter is 50 to 200 $\mu$m.

Specifically, the second metal and the third metal may be different from each other.

According to one embodiment, the amount of the first metal ruthenium may be about 0.1 to about 1 parts by weight, or about 0.1 parts by weight or more, or about 0.2 parts by weight or more, or about 0.3 parts by weight or more, or about 0.4 parts by weight or more, and about 1 parts by weight or less, or about 0.9 parts by weight or less, or about 0.8 parts by weight or less, or about 0.7 parts by weight or less, or about 0.6 parts by weight or less, or about 0.5 parts by weight or less, based on 100 parts by weight of the total catalyst.

According to one embodiment, the ammonia decomposition catalyst may have a porosity of about 30 to about 60%, or about 10% or more, or about 20% or more, or about 30% or more, or about 40% or more, or about 50% or more, and about 60% or less, or about 58 % or less, or about 56% or less, or about 54% or less, or about 52% or less.

According to one embodiment, the median value of pore diameter of the ammonia decomposition catalyst may be about 50 to 200 μm, or about 50 μm or more, or about 75 μm or more, or about 100 μm or more, or about 120 μm or more, or about 140 μm or more, about 150 μm or more, and about 200 μm or less, or about 180 μm or less, or about 160 μm or less.

According to one embodiment, the ammonia decomposition catalyst may have pore volume of about 0.1 to 0.4 mL/g, or about 0.1 mL/g or more, or about 0.2 mL/g or more, or about 0.25 mL/g or more, or about 0.3 mL/g or more, or about 0.33 mL/g or more, and about 0.4 mL/g or less, or about 0.35 mL/g or less.

According to one embodiment, the carrier may be a porous spherical structure.

According to one embodiment, the carrier may be an inorganic oxide structure. Specifically, the carrier may be inorganic oxide comprising one or more elements selected from the group consisting of aluminum (Al), zirconium (Zr), cerium (Ce), and silicon (Si). More specifically, the carrier may be aluminum silicate ($Al_2SiO_5$).

According to one embodiment, the amount of the catalytically active components may be about 20 parts by weight or less, or about 0.1 parts by weight or more, or about 0.5 parts by weight or more, or about 1 parts by weight or more, and about 20 parts by weight or less, less than about 18 parts by weight, or about 15 parts by weight or less, or about 11 parts by weight or less, based on 100 parts by weight of the total catalyst.

According to one embodiment, the weight ratio of the (second metal): (third metal) may be about 1:99 to about 30:70, or about 1:99 or more, or about 10:90 or more, or about 20:80 or more, or about 23:77 or more, and about 30:70 or less, or about 25:75 or less.

According to one embodiment, the weight ratio of the (first metal): (second metal and third metal oxide) may be 1:99 to 10:90, or about 3:97 to 7:93.

According to one embodiment, the ammonia decomposition catalyst may be a porous sphere.

According to one embodiment, the median value of the diameter of the circular cross section of the porous sphere may be about 1 to 10 mm, or about 1 mm or more, or about 2 mm or more, or about 3 mm or more, and about 10 mm or less, about 8 mm or less, about 6 mm or less, or about 4 mm or less.

According to the present disclosure, also provided is a method for decomposition of ammonia, comprising conducting a decomposition reaction of ammonia in the presence of any of the catalyst for decomposition of ammonia described above.

According to one embodiment, the ammonia decomposition reaction may be conducted at a temperature of about 400 to about 700 °C, or about 400 °C or more, or greater than about 400 °C, or about 420 °C or more, and about 700 °C or less, or about 650 °C or less, or about 600 °C or less, or about 550 °C or less, or about 530 °C or less.

As used herein, terms "a first", "a second" and the like are used to explain various constructional elements, and they are used only to distinguish one constructional element from other constructional elements.

Further, the terms used herein are only to explain specific embodiments, and are not intended to limit the invention.

A singular expression includes a plural expression thereof, unless the context clearly indicates otherwise.

As used herein, the term "comprise", "equipped", or "have" is intended to designate the existence of practiced characteristic, number, step, constructional element or combinations thereof, and it is not intended to preclude the possibility of existence or addition of one or more other characteristics, numbers, steps, constructional elements or combinations thereof.

Further, in case it is stated that each layer or element is formed "on" or "above" each layer or element, it means that each layer or element is formed right above each layer or element, or that other layers or elements may be additionally formed between the layers or on the object or substrate.

Although various modifications can be made to the invention and the invention may have various forms, specific examples will be illustrated and explained in detail below. However, it should be understood that they are not intended to limit the invention to specific disclosure, and that the invention includes all the modifications, equivalents or replacements thereof without departing from the spirit and technical scope of the invention.

As used herein, a porous sphere is a porous spherical shape, wherein spherical, sphere, and the like do not necessarily mean mathematically exact shapes, but mean typical or atypical forms such as a sphere, an elliptical sphere, a polyhedron, and the like, having minor axis/major axis value of 0.5 or more. That is, it means a shape that is not a long shape such as a bar, nor a significantly distorted shape. Further, the minor axis means the shortest value among the particle diameters measured on the basis of an axis passing a geometric center point of the particle, and the major axis means the longest value among the particle diameters measured on the basis of an axis passing a geometric center point of the particle.

Further, as used herein, the total catalyst weight means the sum of the weight the carrier and the weight of the catalytically active components supported on the carrier.

Further, as used herein, a median value of pore diameter means the same as $D_{50}$ in particle size analysis, and the

pore diameter at the point where the cumulative volume from smaller particle size becomes 50%, based on 100% of the total particle volume, is referred to as the median value of pore diameter.

According to the present disclosure, provided is a catalyst for decomposition of ammonia comprising: a carrier, and catalytically active components supported on the carrier, wherein the catalytically active components comprise i) ruthenium (Ru) as first metal; ii) a second metal; and iii) a third metal, wherein each of the second metal and third metal is independently one or more selected from the group consisting of lanthanum (La), cerium (Ce), aluminum (Al), and zirconium (Zr), the amount of the first metal ruthenium is 0.1 to 1 part by weight, based on 100 parts by weight of the total catalyst, the porosity is 30 to 60%, and the median value of pore diameter is 50 to 200 $\mu$m.

Specifically, the second metal and the third metal may be different from each other.

The inventors of the present disclosure found out that when a carrier of a specific shape is coated with catalytically active components to prepare a catalyst having specific pore distribution, such a catalyst can achieve very high efficiency as a catalyst for decomposition of ammonia, and completed the invention.

The decomposition reaction of ammonia may be represented by the following Reaction Formula.

$$2NH_3 \rightleftharpoons 3H_2 + N_2$$

This reaction is a reversible process, and can obtain 3 molecules of hydrogen gas from 2 molecules of ammonia, and in general, if the reaction is conducted under high temperature high pressure conditions in the presence of a catalyst, a forward reaction may become dominant, and thus, the entire ammonia may be decomposed while a trace amount of undecomposed ammonia remains.

However, since this forward reaction is an endothermic reaction with large energy difference between the product and reactant, and the activation energy of the reaction is very high, reaction efficiency is not high, and a lot of energy should be input.

Thus, according to one aspect of the invention, an ammonia decomposition reaction is conducted using a catalyst for decomposition of ammonia comprising: a carrier, and catalytically active components supported on the carrier, wherein the catalytically active components comprise i) ruthenium (Ru) as first metal; ii) a second metal; and iii) a third metal, wherein each of the second metal and third metal is independently one or more selected from the group consisting of lanthanum (La), cerium (Ce), aluminum (Al), and zirconium (Zr), the amount of the first metal ruthenium is 0.1 to 1 part by weight, based on 100 parts by weight of the total catalyst, the porosity is 30 to 60%, and the median value of pore diameter is 50 to 200 $\mu$m.

Specifically, the second metal and the third metal may be different from each other.

As catalytically active components, ruthenium, lanthanum (La), cerium (Ce), aluminum (Al), and zirconium (Zr), and the like may be used in the form of complex metal oxide. Wherein, the complex metal oxide means a compound or a mixture wherein 2 or more kinds of the metal elements mentioned as the catalytically active components are mixed at the same or different oxidation numbers.

That is, as catalytically active components, ruthenium, lanthanum (La), cerium (Ce), aluminum (Al), and zirconium (Zr), and the like may be used in the form of a complex metal oxide, and among them, ruthenium is known to directly mediate the reaction, and lanthanum (La), cerium (Ce), aluminum (Al), and zirconium (Zr), and the like may serve as a kind of a cocatalyst.

Specifically, the second metal may be lanthanum or cerium, and the third metal may be cerium or aluminum. Specifically, the second metal and the third metal may be different from each other. More specifically, the second metal may be lanthanum and the third metal may be cerium, or the second metal may be lanthanum and the third metal may be aluminum, or the second metal may be cerium and the third metal may be aluminum.

Further, the ammonia decomposition catalyst according to one aspect of the invention may have a porous shape wherein the median value of pore diameter is 50 to 200 $\mu$m. By using a catalyst of a porous shape, not only the surface area where catalytically active components may contact reactants may be increased, but also heat aggregation of catalytically active components may be prevented, thus improving lifespan of a catalyst.

If the median value of pore diameter is too small, reactant may not smoothly flow into the catalyst pores, and thus, active sites in the pores may not be sufficiently utilized, and reaction efficiency may be lowered. To the contrary, if the median value of pore diameter is too large, the specific surface area of the catalyst may decrease, and thus, dispersity of active components may be lowered and the number of active sites may decrease, and thus, reaction performance may be degraded.

More specifically, the median value of pore diameter of the ammonia decomposition catalyst may be about 50 $\mu$m or more, or about 75 $\mu$m or more, or about 100 $\mu$m or more, or about 120 $\mu$m or more, or about 140 $\mu$m or more, about 150 $\mu$m or more, and about 200 $\mu$m or less, or about 180 $\mu$m or less, or about 160 $\mu$m or less.

Within the above range, ruthenium support amount of noble metal may be minimized, and simultaneously, the

efficiency of ammonia decomposition reaction may be increased, and catalyst lifespan may be improved.

According to one embodiment, the ammonia decomposition catalyst may have a porosity of about 30 to about 60%, or about 10% or more, or about 20% or more, or about 30% or more, or about 40% or more, or about 50% or more, and about 60% or less, or about 58 % or less, or about 56% or less, or about 54% or less, or about 52% or less.

If the porosity is too low, reactant may not contact the catalytically active components existing in the pores, and thus, ammonia decomposition performance may be degraded. To the contrary, if the porosity is too high, due to decrease in catalyst strength, the catalyst may be broken during the process of filling the catalyst in a reactor or during an ammonia decomposition reaction, thus causing differential pressure in the reactor, which may lead to degradation of catalyst performance.

According to one embodiment, the carrier may be a porous spherical structure.

According to one embodiment, the carrier may be an inorganic oxide structure. More specifically, the carrier may comprise one or more oxides selected from the group consisting of aluminum (Al), zirconium (Zr), cerium (Ce), and silicon (Si). More specifically, the carrier may be aluminum silicate ($Al_2SiO_5$).

According to one embodiment, the amount of the first metal may be about 0.1 to about 1 parts by weight, or about 0.1 parts by weight or more, or about 0.2 parts by weight or more, or about 0.3 parts by weight or more, or about 0.4 parts by weight or more, and about 1 parts by weight or less, or about 0.9 parts by weight or less, or about 0.8 parts by weight or less, or about 0.7 parts by weight or less, or about 0.6 parts by weight or less, or 0.5 parts by weight or less, based on 100 parts by weight of the total catalyst.

If the amount of the first metal is too small, the efficiency of ammonia decomposition reaction may be degraded. To the contrary, if the amount of the first metal is too large, active components may be aggregated and dispersity may be lowered, and thus, catalyst performance may be degraded. Further, to increase the amount of the first metal, the amount or number of coating may be too increased during the process of catalyst manufacture, thus generating first metal not exposed on the catalyst surface, thereby lowering catalyst efficiency. Furthermore, the pores of the structure may be filled during the process of increasing the coating amount, and the flow of reactant may become unsmooth, thus generating differential pressure, and the specific surface area of the catalyst may decrease, and catalyst performance may be degraded. Wherein, the first metal may be ruthenium.

According to one embodiment, the ammonia decomposition catalyst may have a pore volume of about 0.1 to 0.4 mL/g, or about 0.1 mL/g or more, or about 0.2 mL/g or more, or about 0.25 mL/g or more, or about 0.3 mL/g or more, or about 0.33 mL/g or more, and about 0.4 mL/g or less, or about 0.35 mL/g or less.

If the pore volume is too small, active components may not enter the pores during the process of supporting a catalyst, and thus, the specific surface area of a structure may not be utilized and catalyst performance may be lowered, and if the pore volume is too large, the specific surface area may decrease, and thus, dispersity of active components may be lowered, and catalyst efficiency may be lowered.

According to one embodiment, the amount of catalytically active components, i.e., the amount of the first metal, second metal and third metal may be about 20 parts by weight or less, or about 0.1 parts by weight or more, or about 0.5 parts by weight or more, or about 1 parts by weight or more, and about 20 parts by weight or less, less than about 18 parts by weight, or about 15 parts by weight or less, or about 11 parts by weight or less, based on 100 parts by weight of the total catalyst.

If the amount of catalytically active components is too small, the efficiency of an ammonia decomposition reaction may be lowered, and if the amount of catalytically active components is too large, catalytically active components not exposed to the surface may be generated, and thus, catalyst efficiency may be lowered, and furthermore, the pores of the structure may be blocked, and thus, a differential pressure may be generated, and the performance of the catalyst may be degraded.

According to one embodiment, the weight ratio of (second metal) : (third metal) may be about 1:99 to about 30:70, or about 1:99 or more, or about 10:90 or more, or about 20:80 or more, or about 23:77 or more, and about 30:70 or less, or about 25:75 or less.

According to one embodiment, the weight ratio of (first metal) : (second metal and third metal oxide) may be 1:99 to 10:90, or about 3:97 to 7:93. Although the empirical formula of the catalytically active components of the present disclosure is shown as a mole ratio according to a chemical formula description method, when a catalyst is actually prepared, the weight ratio is measured to control the ratio, and thus, the weight ratio of (first metal) : (second metal third metal oxide) corresponding to the mole ratio of the empirical formula of the catalytically active components is as described above.

According to one embodiment of the invention, the catalytically active metal may be represented by the following Chemical Formula.

[Chemical Formula] $Ru_xA_yB_zO_u$

In the Chemical Formula, Ru is ruthenium, A is second metal, B is third metal, O is oxygen,

each of A and B is independently one or more selected from the group consisting of lanthanum (La), cerium (Ce), aluminum (Al), and zirconium (Zr),

x is 1 to 5, more specifically, for example, 1 or more, 1.5 or more, 2 or more, or 3 or more, and 5 or less, or 4 or less, or 3.5 or less,

y is 1 to 15, more specifically, for example, 1 or more, 3 or more, 5 or more, or 10 or more, and 15 or less, 13 or less or 11 or less,

z is 20 to 40, more specifically, for example, 20 or more, 25 or more, or 30 or more, and 40 or less, or 35 or less, and

u may vary according to the oxidation number of the metal elements, and may be 50 to 90, more specifically, for example, 50 or more, or 60 or more, or 70 or more, and 90 or less, or 80 or less.

Specifically, A and B may be different from each other.

However, in the ammonia decomposition catalyst according to one embodiment of the invention, the composition of each element is not necessarily limited to the above-explained range.

According to one embodiment, the ammonia decomposition catalyst may be a porous sphere. The porous sphere is a porous spherical shape, wherein spherical, sphere, and the like do not necessarily mean mathematically exact shapes, but mean typical or atypical shapes such as a sphere, an elliptical sphere, a polyhedron, and the like, having minor axis/major axis value of 0.5 or more. That is, it means a shape that is not a long shape such as a bar, nor a significantly distorted shape. Further, the minor axis means the shortest value among the particle diameters measured on the basis of an axis passing a geometric center point of the particle, and the major axis means the longest value among the particle diameters measured on the basis of an axis passing a geometric center point of the particle.

According to one embodiment, the median value of the diameter of the circular cross section of the porous sphere may be about 1 to 10 mm, or about 1 mm or more, or about 2 mm or more, or about 3 mm or more, and simultaneously about 10 mm or less, about 8 mm or less, about 6 mm or less, or about 4 mm or less.

If the median value of the diameter of the circular cross section of the porous sphere is too large, a packing density may decrease, and thus, reactant may bypass and may not contact the catalyst, thereby degrading catalyst efficiency. To the contrary, the median value of the diameter of the circular cross section of the porous sphere is too small, a packing density may increase, and thus, a differential pressure may be generated, thereby degrading reaction efficiency.

The above-explained catalyst may be prepared by the following method.

First, an aqueous solution of ruthenium salt is prepared. Wherein, the aqueous solution of ruthenium salt may include an aqueous solution of ruthenium fluoride, an aqueous solution of ruthenium chloride, an aqueous solution of ruthenium nitrate, an aqueous solution of ruthenium sulfate, an aqueous solution of perruthenate ion, and the like.

Thereafter, second metal-third metal oxide powders are added thereto, and a basic condition is made using ammonia water, and the like. It is filtered and washed, and dried in an oven of about 100 to about 150 °C for about 6 to about 20 hours to obtain powders.

The obtained powders are added to distilled water, zirconia balls are added and stirred in a roller to prepare a slurry.

A carrier is impregnated and coated therewith, and the remaining liquid was removed, followed by drying in an oven of about 100 to about 150 °C for about 6 to about 20 hours. The weight of the dried sample is measured to confirm the amount of catalytically active components coated. The process of coating a carrier with the slurry solution and drying may be repeated as required, to obtain a supported catalyst wherein the above-explained first, second and third metals are supported on a carrier.

Meanwhile, the supported catalyst prepared by the above method may be used as a catalyst for decomposition of ammonia as it is, or it may be fired or reduced and used as a catalyst for decomposition of ammonia.

When firing and reducing, firing and reducing conditions commonly used in the field to which the invention pertains, such as treating of the obtained catalyst with hydrogen gas under condition of about 300 to about 600 °C, and the like, may be adopted.

Further, according to the present disclosure, provided is a method for decomposition of ammonia, comprising conducting a decomposition reaction of ammonia in the presence of any of the catalyst for decomposition of ammonia described above.

In the method for decomposition of ammonia according to one embodiment of the invention, reaction conditions commonly used in the field to which the invention pertains may be adopted, except using the catalyst according to one embodiment of the invention.

According to one embodiment, the ammonia decomposition reaction may be conducted at a temperature of about 400 to about 700 °C, or about 400 °C or more, or greater than about 400 °C, or about 420 °C or more, and about 700 °C or less, about 650 °C or less, about 600 °C or less, or about 550 °C or less, or about 530 °C or less.

According to another embodiment, the ammonia decomposition reaction may be conducted after purging with inert gas, and the like, before the decomposition reaction.

Further, during the reaction, the shape of a reactor is not specifically limited, and any reactor of a suitable shape

that can infuse ammonia gas into the catalyst of the above-explained shape and directly contact the catalyst with reactant, may be selected and used.

## [ADVANTAGEOUS EFFECTS]

According to the present disclosure, provided is a catalyst for decomposition of ammonia having excellent low temperature decomposition performance at high space velocity.

Further, provided is a catalyst for decomposition of ammonia in which catalyst heat aggregation is prevented, thus being capable of providing reaction process stability, and having improved lifespan.

Further, according to the present disclosure, provided is a method for decomposition of ammonia using such a catalyst for decomposition of ammonia.

## [BRIEF DESCRIPTION OF DRAWINGS]

Fig. 1 shows the porous spherical structure used in one embodiment of the invention.
Fig. 2 shows a catalyst where active components are supported according to one embodiment of the invention,
Fig. 3 shows a catalyst according to a Comparative Example of the invention.
Fig. 4 shows a catalyst according to a Comparative Example of the invention.
Fig. 5 shows a pore diameter distribution graph of the porous spherical structure of an experimental example of the present invention and the catalyst of example 1 where active components are supported.
Fig. 6 shows a graph of $NH_3$ conversion of the catalyst of Example 1 according to the catalyst layer temperature of an experimental example of the present invention.

## [DETAILED DESCRIPTION OF THE EMBODIMENTS]

Hereinafter, the actions and effects of the invention will be explained in detail through specific examples of the invention. However, these examples are presented only as the illustrations of the invention, and the scope of the right of the invention is not determined thereby.

### Example 1

As the source of metal component, an aqueous solution of ruthenium chloride, and LaCeria synthesized by coprecipitation were used.

To an aqueous solution of ruthenium chloride prepared considering the content of each metal element in the catalytically active component, 20g of LaCeria was added, and the pH was adjusted to 9 with ammonia water.

The solution was stirred for 18 hours using a stirrer and a magnetic bar. It was filtered and washed with water until the filtered liquid became neutral, and put in an oven of 110 °C and dried about 12 hours to obtain catalyst powders.

18g of the catalyst powders obtained above and 1.8 g of Boehmite were added to 72 mL of distilled water to prepare a catalyst solution. 360 g of zirconia balls with diameter of 5 mm or less were added thereto, and then, milled in a 200 rpm roller for about 6 hours to control the size of particles in the catalyst solution. To dissolve Boehmite and use it as a binder, the pH was adjusted to 3.5 using a nitric acid solution with a concentration of 60%.

In the catalyst solution, about 50 g of porous spherical structures with a size of 3.2 mm (material : Aluminum silicate ball; Manufacturing company : Saint-Gobain Norpro; product name:SA52252) were added as a carrier and impregnated, and then, the remaining solution was removed using an air gun.

It was put in an oven of about 110°C and dried for about 6 hours.

Impregnation of the carrier with the catalyst solution and drying were repeated until 10 parts by weight, among 100 parts by weight of the total catalyst coated, became catalyst powders. As the result, a formed catalyst where catalytically active components are coated on the surfaces of porous spherical structures was obtained.

The metal components, i.e., active components, in the obtained catalyst material, were analyzed by ICP-OES, and whether or not the structure of the carrier was changed was confirmed by Hg porosity.

### Examples 2 to 3

A supported catalyst was obtained by the same method as Example 1, except that the number of coating was varied to change the amount of catalytically active material supported.

**Example 4**

A supported catalyst was obtained by the same method as Example 1, except that commercial LaAlOx (manufacturing company: Sasol; product name: TH100/150/L10) was used instead of LaCeria synthesized by coprecipitation.

**Example 5**

A supported catalyst was obtained by the same method as Example 1, except that commercial CeAlOx (manufacturing company: Sasol; product name: TH100/150/Ce20) was used instead of LaCeria synthesized by coprecipitation.

**Example 6**

A supported catalyst was obtained by the same method as Example 1, except that the concentration of the ruthenium aqueous solution was increased by 2.4 times to increase Ru content in the catalyst powder by about 2.4 times.

**Example 7**

A supported catalyst was obtained by the same method as Example 1, except that 4.8mm porous spherical structures (material: : Aluminum silicate ball; manufacturing company :Saint-Gobain Norpro; product name : SA52252) were used as carriers, and supporting was conducted 5 times to achieve the same support amount as Example 1.

**Example 8**

A supported catalyst was obtained by the same method as Example 1, except that 6.1mm porous spherical structures (material: : Aluminum silicate ball; manufacturing company :Saint-Gobain Norpro; product name : SA52252) were used as carriers, and supporting was conducted 6 times to achieve the same support amount as Example 1.

**Comparative Example 1**

A supported catalyst was obtained by the same method as Example 1, except that the number of coating (the number of supporting) was varied to 10 times to change the amount of catalytically active materials supported as shown in Table 1.

**Comparative Example 2 and 3**

In the case of Comparative Example 2, a catalyst was prepared by the same method as Examples 1, 2, 3 and Comparative Example 1, except that supporting was not conducted, and instead the obtained powders themselves were molded.

In the case of Comparative Example 3, the same process as Examples 1, 2, 3 and Comparative Example 1 was conducted, except that the catalyst was supported on ceramic hollow cylinders (material: Ceramic rings; manufacturing company : Saint-Gobain NorPro; product name : SA5518) until 13 wt% of the coated catalyst became powders.

**Comparative Example 4**

A supported catalyst was obtained by the same method as Example 1, except that 21.5g of catalyst powders were added when milling the catalyst to increase the viscosity of the catalyst solution.

The data of the obtained catalysts are summarized in the following Table 1.

[Table 1]

| | Catalyst construction | | | | | Catalyst shape | |
|---|---|---|---|---|---|---|---|
| | Ru amount (unit::wt%) | Empirical formula of active components | Number of coatings | Support amount (wt%) | Amount of carrier (wt%) | Shape | Diameter of circular cross section (mm) |
| Example1 | 0.29 | $Ru_{1.8}/La_{10.3}Ce_{24.1}O_{63.8}$ | 4 | 11 | 89 | Spherical | 3.2 |

(continued)

| | Catalyst construction | | | | | Catalyst shape | |
|---|---|---|---|---|---|---|---|
| | Ru amount (unit::wt%) | Empirical formula of active components | Number of coatings | Support amount (wt%) | Amount of carrier (wt%) | Shape | Diameter of circular cross section (mm) |
| Example2 | 0.39 | $Ru_{1.8}/La_{10.3}Ce_{24.1}O_{63.8}$ | 6 | 15 | 85 | Spherical | 3.2 |
| Example3 | 0.52 | $Ru_{1.8}/La_{10.3}Ce_{24.1}O_{63.8}$ | 8 | 20 | 80 | Spherical | 3.2 |
| Example4 | 0.29 | $Ru_{0.7}/La_{1.3}Al_{38.4}O_{59.6}$ | 4 | 10 | 90 | Spherical | 3.2 |
| Example5 | 0.30 | $Ru_{0.7}/Ce_{2.7}Al_{36.5}O_{60.1}$ | 4 | 10 | 90 | Spherical | 3.2 |
| Example6 | 0.68 | $Ru_{4.1}/La_{10.1}Ce_{23.6}O_{62.3}$ | 4 | 10 | 90 | Spherical | 3.2 |
| Example7 | 0.30 | $Ru_{1.8}/La_{10.3}Ce_{24.1}O_{63.8}$ | 5 | 10 | 90 | Spherical | 4.8 |
| Example8 | 0.30 | $Ru_{1.8}/La_{10.3}Ce_{24.1}O_{63.8}$ | 6 | 10 | 90 | Spherical | 6.1 |
| Comparative Example1 | 0.69 | $Ru_{1.8}/La_{10.3}Ce_{24.1}O_{63.8}$ | 10 | 24 | 76 | Spherical | 3.2 |
| Comparative Example2 | 2.22 | $Ru_{3.5}/La_{6.2}Ce_{20.7}O_{70}$ | - | 100 | 0 | Polygonal | 1-3 |
| Comparative Example3 | 0.37 | $Ru_{3.5}/La_{6.2}Ce_{20.7}O_{70}$ | 6 | 18 | 82 | Hollow cylinder | outer diameter:4.4, inner diameter:1.2 |
| Comparative Example4 | 0.30 | $Ru_{1.8}/La_{10.3}Ce_{24.1}O_{63.8}$ | 3 | 11 | 89 | Spherical | 3.2 |

**Analysis of pore properties**

The pore properties of the catalyst prepared in the Examples and Comparative Examples were analyzed using a mercury intrusion porosimeter (manufacturing method: Micromeritics, model name: AutoPore V) according to mercury porosimetry.

An appropriate amount of a sample was put in a sample cell without a separate pre-treatment, and then, pressurized under 0.2 to 33,000 psi for mercury intrusion in the catalyst pores, and the pore volume was measured. The average diameter of the values obtained by the analysis was used as the median value of pore diameter.

The analysis results are summarized in the following Table 2.

[Table 2]

| | Pore properties | | | |
|---|---|---|---|---|
| | Median value of pore diameter (μm) | Pore volume (mL/g) | Porosity (%) | Median value of pore diameter/porosity |
| Example1 | 128 | 0.28 | 51 | 2.51 |
| Example2 | 144 | 0.33 | 58 | 2.48 |
| Example3 | 152 | 0.32 | 55 | 2.76 |
| Example4 | 129 | 0.29 | 52 | 2.48 |
| Example5 | 128 | 0.29 | 51 | 2.51 |
| Example6 | 128 | 0.28 | 51 | 2.51 |
| Example7 | 138 | 0.31 | 55 | 2.51 |
| Example8 | 159 | 0.30 | 57 | 2.79 |
| Comparative Example1 | 444 | 0.33 | 57 | 7.79 |
| Comparative Example2 | 0.04 | 0.015 | 0.07 | 0.57 |

(continued)

| | Pore properties | | | |
|---|---|---|---|---|
| | Median value of pore diameter (μm) | Pore volume (mL/g) | Porosity (%) | Median value of pore diameter/porosity |
| Comparative Example3 | 73 | 0.09 | 24 | 3.04 |
| Comparative Example4 | 45 | 0.18 | 53 | 0.85 |

Further, the analysis results of the pore properties of the porous spherical structure used as a carrier and the catalyst of Example 1 where active components are supported are shown in the following Table 3 and Fig. 5.
Measurement was conducted by mercury porosimetry as explained above.

[Table 3]

| Properties | | | |
|---|---|---|---|
| | | Carrier | Example 1 |
| Pore volume | (mL/g) | 0.29 | 0.28 |
| Bulk density | (g/mL) | 1.72 | 1.82 |
| Apparent density | (g/mL) | 3.46 | 3.67 |
| Median value of pore diameter | (μm) | 119.10 | 127.80 |
| porosity | (%) | 50.40 | 50.50 |

As the result, it can be confirmed that the pore properties of carriers were not significantly changed even if the catalyst was supported.

**Ammonia decomposition reaction**

Each 3 g of the catalyst prepared in the Examples and Comparative Example were taken, and filled in an OD 1/2" reactor, and the temperature was raised to 350 °C with nitrogen gas, and then, hydrogen/nitrogen mixed gas (hydrogen 50v%) was flowed at the corresponding temperature for about 1 hour for reduction.
The reduced catalyst was purged under nitrogen atmosphere of about 350 °C for about 30 minutes, and while flowing 99% ammonia gas at high space velocity (GHSV, Gas hourly space velocity) of 4000 $h^{-1}$, the temperature of the reaction system was raised to about 400 °C, and while raising the temperature to 550°C at the interval of 50 °C, ammonia decomposition rate was analyzed.
The analysis results are summarized in the following Table 4.
For conversion, outlet gas discharged from the reactor was analyzed by gas chromatography and the volume ratio(n) of $NH_3$ to the total volume of discharged gas was calculated, and conversion was calculated as follows:

$$\text{conversion} = (1-n)(1+n).$$

For differential pressure property of the catalyst, a pressure transmitter was installed at the front and rear of a reactor, and a pressure was measured to calculate pressure difference between the front/rear.
A catalyst layer temperature difference is a temperature difference between the temperature of a furnace used to heat a reactor and the temperature inside a catalyst layer, and was measured by inserting a thermocouple (TC) in the middle of the catalyst layer.
Activity per gram ruthenium (gRu) was calculated as (flow rate of input ammonia) × conversion /22.4/(Ru mass in packed catalyst).

[Table 4]

| | $NH_3$ conversion rate according to temperature (%) | | | | Differential pressure property of catalyst | Catalyst layer temperature difference | Activity per gRu |
|---|---|---|---|---|---|---|---|
| | @400°C | @450°C | @500°C | @550°C | @500°C | @500°C | mmol$NH_3$/gRu/min, @500°C |
| Example1 | 17.9 | 42.1 | 78.0 | 99.1 | 0.1 | 40 | 721.6 |
| Example2 | 20.4 | 47.1 | 82.9 | 99.4 | 0.1 | 65 | 561.7 |
| Example3 | 23.6 | 50.9 | 85.9 | 99.6 | 0.1 | 65 | 395.5 |
| Example4 | 18.1 | 43.2 | 80.3 | 99.4 | 0.1 | 43 | 742.9 |
| Example5 | 18.0 | 42.9 | 79.8 | 99.3 | 0.1 | 42 | 738.2 |
| Example6 | 34.5 | 67.2 | 99.2 | - | 0.1 | 68 | 391.4 |
| Example7 | 18.0 | 42.3 | 78.2 | 99.2 | - | 40 | 723.5 |
| Example8 | 17.8 | 42.3 | 78.1 | 99.2 | - | 41 | 722.5 |
| Comparative Example1 | 26.5 | 55.7 | 89.2 | 99.7 | 0.1 | 67 | 290.0 |
| Comparative Example2 | 18.0 | 40.0 | 77.8 | 89.2 | 0.3 | 38 | 94.0 |
| Comparative Example3 | 5.4 | 17.2 | 51.0 | - | 0.9 | 32 | 369.8 |
| Comparative Example4 | 10.2 | 30.2 | 55.7 | 88.8 | 0.7 | 38 | 498.1 |

It was confirmed that the catalysts of Examples 1 to 8 have excellent activity per gRu, i.e., activity per the same ruthenium, compared to Comparative Examples 1 to 3.

Particularly, it was confirmed that in the case of Comparative Example 1, although pore properties such as pore volume and porosity are comparable to the Examples, activity per gRu is very inferior to the Examples. Particularly, the median value of pore diameter was large because the coating amount of the catalyst of Comparative Example 1 was larger compared to the Examples, and thus, small pores of about 100 μm were blocked by catalyst coating and only large pores remained, and due to excessive coating of the catalyst, pore of a carrier could not be utilized. As the result, activity per gRu was inferior to the Examples.

Further, in the catalysts according to the Examples, pressure difference between the front and rear of a reactor, i.e., a differential pressure was measured to be low. Meanwhile, in Comparative Examples 3 and 4, differential pressures were high (0.9 and 0.7, respectively), which means that gas flow in the catalyst-packed part of the reactor is unsmooth compared to the Examples, and thus, catalyst performance in the whole reaction flow is remarkably degraded regardless of activity per gRu.

Further, comparing Example 6 and Comparative Example 1, it is understood that the weight ratio of Ru included in the catalyst is similar, but the number of supporting (coating) is different (4 times in Example 6, 10 times in Comparative Example 1), and thus, catalytic activity varied. As can be seen from the median value of pore diameter of Comparative Example 1, it is thought that small pores were blocked due to increased supporting number, and thus, the catalyst trapped in the pores could not participate in the reaction.

In Comparative Example 3, large differential pressure was generated, and a reaction could not progress at 550°C, and thus, conversion at 550°C could not be measured.

Comparative Example 4 was conducted by the same method as Example 1, except that 21.5 g of catalyst powders were added during milling to increase the viscosity of the catalyst solution, and as the result, the median value of pore diameter became too small and pore volume also decreased. Further, as the median value of pore diameter became too small, a differential pressure was large, and catalyst performance was inferior.

## Claims

1. A catalyst for decomposition of ammonia comprising

   a carrier, and catalytically active components supported on the carrier,
   wherein the catalytically active components comprise i) ruthenium (Ru) as a first metal; ii) a second metal; and iii) a third metal,

      wherein each of the second metal and third metal is independently one or more selected from the group consisting of lanthanum (La), cerium (Ce), aluminum (Al), and zirconium (Zr),
      the amount of the first metal ruthenium is 0.1 to 1 part by weight, based on 100 parts by weight of the total catalyst,
      the porosity is 30 to 60%, and
      a median value of pore diameter is 50 to 200 μm.

2. The catalyst for decomposition of ammonia according to claim 1, wherein the pore volume is 0.1 to 0.4 mL/g.

3. The catalyst for decomposition of ammonia according to claim 1, wherein the carrier is a porous spherical structure.

4. The catalyst for decomposition of ammonia according to claim 1, wherein the carrier is an inorganic oxide structure.

5. The catalyst for decomposition of ammonia according to claim 1, wherein the amount of the catalytically active components is 20 parts by weight or less, based on 100 parts by weight of the total catalyst.

6. The catalyst for decomposition of ammonia according to claim 1, wherein a weight ratio of the (second metal):(third metal) is 1:99 to 30:70.

7. The catalyst for decomposition of ammonia according to claim 1, wherein a weight ratio of the (first metal): (second metal and third metal oxide) is 1:99 to 10:90.

8. The catalyst for decomposition of ammonia according to claim 1, wherein the catalyst is a porous sphere.

9. The catalyst for decomposition of ammonia according to claim 8, wherein a median value of a diameter of a circular cross section of the porous sphere is 1 to 10 nm.

10. A method for decomposition of ammonia, comprising conducting a decomposition reaction of ammonia in the presence of the catalyst for decomposition of ammonia according to any one of claims 1 to 9.

11. The method for decomposition of ammonia according to claim 10, wherein the method is conducted at 400 to 700°C.

【FIG. 1】

porous spherical structure

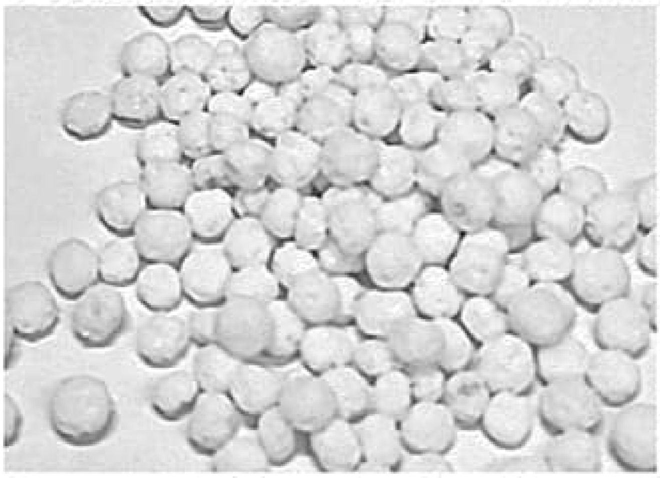

【FIG. 2】

Example 1

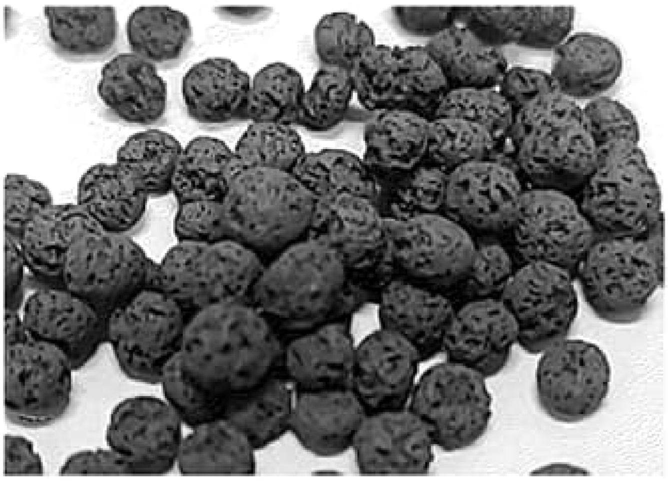

【FIG. 3】

Comparative Example 2

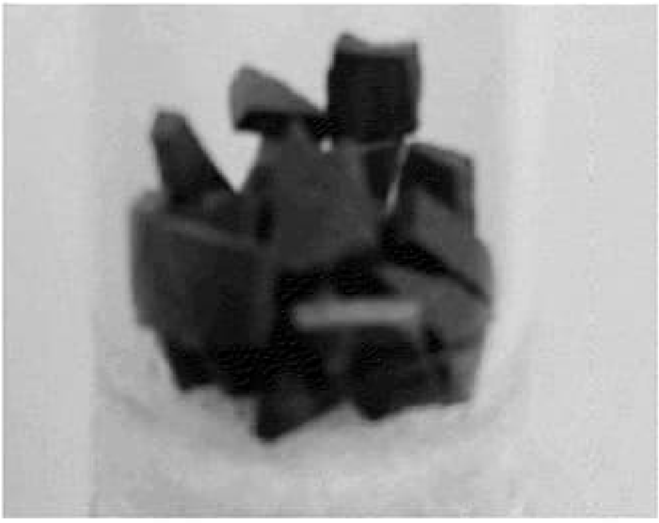

【FIG. 4】

Comparative Example 3

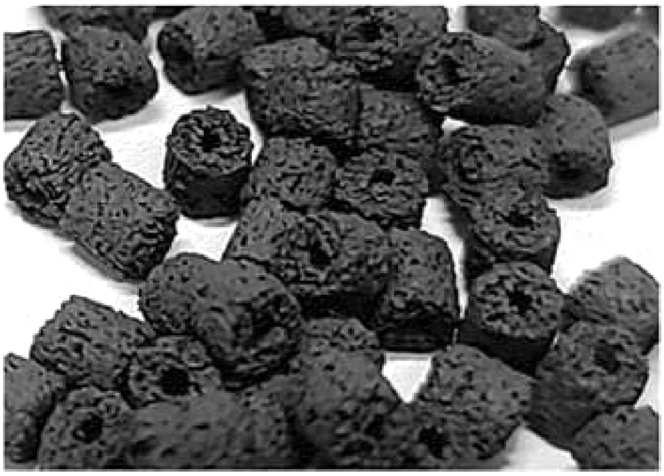

【FIG. 5】

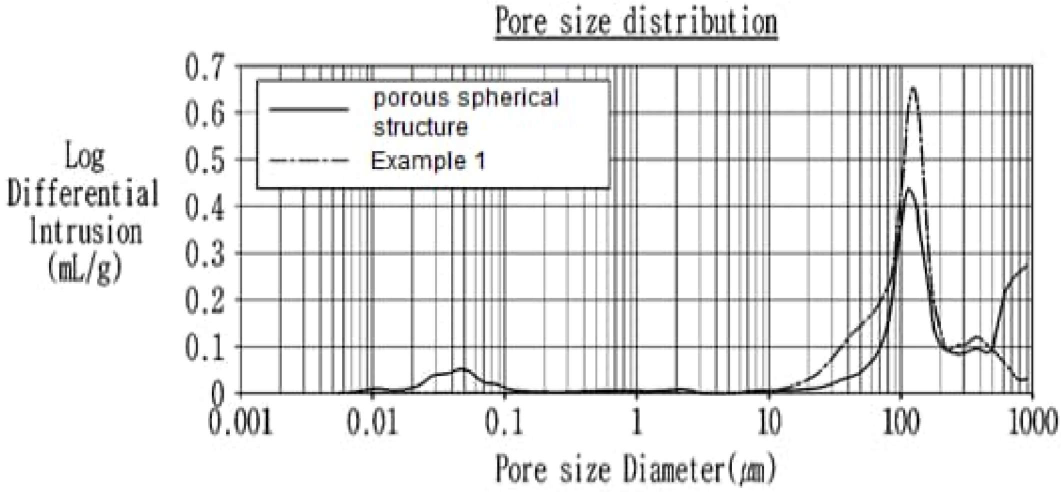
Pore size distribution
Log Differential Intrusion (mL/g)
0.7
0.6
0.5
0.4
0.3
0.2
0.1
0
porous spherical structure
Example 1
0.001
0.01
0.1
1
10
100
1000
Pore size Diameter(㎛)

【FIG. 6】

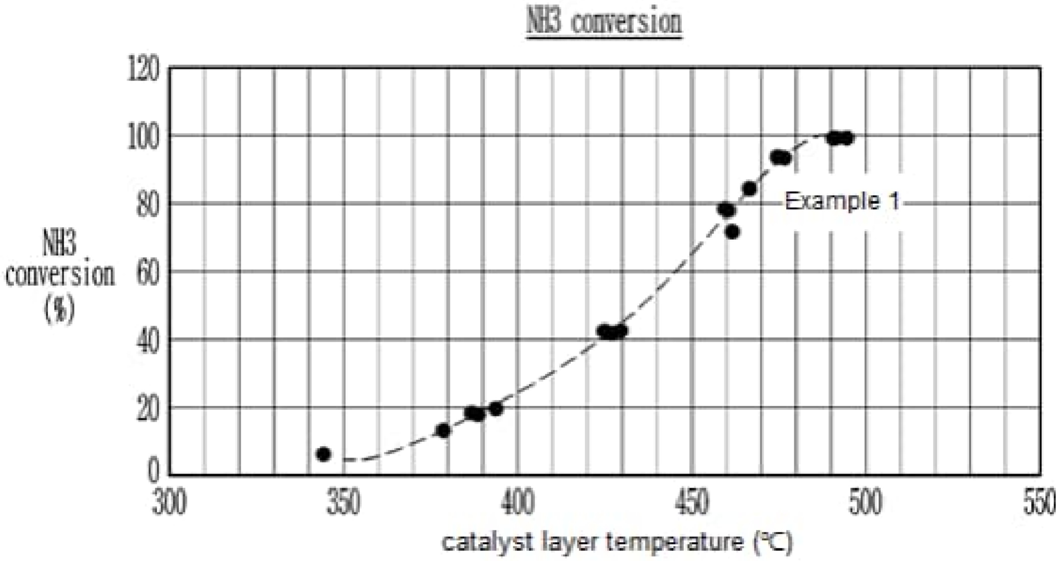
NH3 conversion
NH3 conversion (%)
120
100
80
60
40
20
0
Example 1
300
350
400
450
500
550
catalyst layer temperature (℃)

**INTERNATIONAL SEARCH REPORT**

International application No.
**PCT/KR2024/010749**

**A. CLASSIFICATION OF SUBJECT MATTER**

**B01J 23/63**(2006.01)i; **B01J 20/16**(2006.01)i; **B01J 23/46**(2006.01)i; **B01J 35/64**(2024.01)i; **B01J 35/63**(2024.01)i; **B01J 35/51**(2024.01)i; **B01J 37/02**(2006.01)i; **C01B 3/04**(2006.01)i; **B01J 35/60**(2024.01)i; **B01J 35/00**(2006.01)i

According to International Patent Classification (IPC) or to both national classification and IPC

**B. FIELDS SEARCHED**

Minimum documentation searched (classification system followed by classification symbols)

B01J 23/63(2006.01); B01J 23/00(2006.01); B01J 23/10(2006.01); B01J 23/46(2006.01); B01J 23/58(2006.01); B01J 27/232(2006.01); B01J 35/10(2006.01); C01B 3/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 암모니아 분해(ammonia decomposition), 촉매(catalyst), 루테늄(ruthenium), 란타넘(lanthanum), 세륨(cerium), 알루미늄(aluminium), 기공률(porosity), 담체(carrier)

**C. DOCUMENTS CONSIDERED TO BE RELEVANT**

| Category* | Citation of document, with indication, where appropriate, of the relevant passages | Relevant to claim No. |
|---|---|---|
| X | JP 2023-076661 A (RESONAC HOLDINGS CORP.) 01 June 2023 (2023-06-01) See paragraphs [0012], [0016]-[0023], [0051] and [0065]. | 1-11 |
| A | KR 10-2021-0147910 A (KOREA RESEARCH INSTITUTE OF CHEMICAL TECHNOLOGY) 07 December 2021 (2021-12-07) See entire document. | 1-11 |
| A | KR 10-2021-0052938 A (WONIK MATERIALS CO., LTD.) 11 May 2021 (2021-05-11) See entire document. | 1-11 |
| A | JP 2016-159209 A (NATIONAL INSTITUTE OF ADVANCED INDUSTRIAL SCIENCE AND TECHNOLOGY) 05 September 2016 (2016-09-05) See entire document. | 1-11 |
| A | JP 2021-146315 A (TOYOTA CENTRAL R&D LABS INC. et al.) 27 September 2021 (2021-09-27) See entire document. | 1-11 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 November 2024** | **04 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/010749**

| Patent document cited in search report | | | Publication date (day/month/year) | Patent family member(s) | | | Publication date (day/month/year) |
|---|---|---|---|---|---|---|---|
| JP | 2023-076661 | A | 01 June 2023 | JP | 7264154 | B2 | 25 April 2023 |
| | | | | JP | WO2019-188219 | A1 | 11 March 2021 |
| | | | | WO | 2019-188219 | A1 | 03 October 2019 |
| KR | 10-2021-0147910 | A | 07 December 2021 | CN | 115916395 | A | 04 April 2023 |
| | | | | EP | 4159311 | A1 | 05 April 2023 |
| | | | | JP | 2023-527419 | A | 28 June 2023 |
| | | | | KR | 10-2570390 | B1 | 25 August 2023 |
| | | | | US | 2023-0234841 | A1 | 27 July 2023 |
| | | | | WO | 2021-241841 | A1 | 02 December 2021 |
| KR | 10-2021-0052938 | A | 11 May 2021 | KR | 10-2304406 | B1 | 23 September 2021 |
| JP | 2016-159209 | A | 05 September 2016 | JP | 6381131 | B2 | 29 August 2018 |
| JP | 2021-146315 | A | 27 September 2021 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230098840
- KR 1020240097992